Europäisches Patentamt

European Patent Office

Office européen des brevets

(19)

(11) Veröffentlichungsnummer: **0 282 890**
**A1**

(12) **EUROPÄISCHE PATENTANMELDUNG**

(21) Anmeldenummer: 88103692.5

(51) Int. Cl.⁴: **A47J 27/04**

(22) Anmeldetag: 09.03.88

(30) Priorität: 19.03.87 DE 3708980

(43) Veröffentlichungstag der Anmeldung:
**21.09.88 Patentblatt 88/38**

(84) Benannte Vertragsstaaten:
**AT BE CH DE ES FR GB GR IT LI LU NL SE**

(71) Anmelder: **KRECK-EDELSTAHL GMBH**

**D-6342 Haiger 13(DE)**

(72) Erfinder: **Pulfrich, Horst, Dipl.-Ing.**
**Am Krinzel 14**
**D-6342 Haiger 9(DE)**
Erfinder: **Rink, Willi, Dipl.-Ing.**
**Am Schönblick 9**
**D-6342 Haiger 2(DE)**

(74) Vertreter: **Missling, Arne, Dipl.-Ing.**
**Patentanwalt Bismarckstrasse 43**
**D-6300 Giessen(DE)**

(54) **Entsafter.**

(57) Die Erfindung betrifft einen Entsafter (10), der einen insbesonderen zylindrischen Kopf (12) mit einem Deckel (18) aufweist, welcher druckdicht auf dem Topfrand befestigbar ist und ein Sicherheitsventil (24) aufweist. Ein Einsatz (40) schließt mit seinem oberen Rand (42) unmittelbar an den Dekkel an und hat unterhalb seines Lochbodens (44) eine Saftauffangschale (30), von der eine Abfülleitung (32) nach außen führt, bevorzugt ein Steigrohr mit einem absperrbaren Auslauf (38). Zur Abstützung der Saftauffangschale(30) ist im Abstand (A) zum Topfboden (14) ein Rost (26) vorhanden. Randöffnungen des Einsatzes (40) ermöglichen den Dampfeinlaß von oben aus einem äußeren Ringraum (R) im Topf (12). Die Abfülleitung (32) kann im Deckel (18) fest angebracht sein und/oder eine elastische Dichtung (36) durchsetzen.

Fig. 1

## Entsafter

Die vorliegende Erfindung betrifft einen Entsafter gemäß dem Oberbegriff von Anspruch 1.

Bei herkömmlichen Entsaftern ist im unteren Teil eines zylindrischen Topfes ein Auslauf vorhanden, meist in Form eines Stutzens mit Zapfhahn. Diese Ausführungsform ist aufwendig und auch anfällig für Beschädigungen an den unten vorstehenden Bauteilen, für die gegebenenfalls besondere Schutz-und Dichtungseinrichtungen erforderlich sind. Über dies ist die Handhabung nicht unkompliziert, weil das Abfüllen allein durch Schwerkraft erfolgt. Das Aufnahmegefäß, beispielsweise eine Flasche, muß daher unterhalb des Abfüllniveaus aufgestellt oder sonst wie gehalten werden. Weil der abzufüllende Saft im Regelfalle heiß ist, kann man die Flasche nicht einfach in der Hand halten; vielmehr benötigt man eine Abstellfläche, wofür nicht nur genügend Platz, sondern auch geeignetes Mobiliar, eine Stützkonstruktion oder dergleichen vorhanden sein muß.

Es ist ein wichtiges Ziel der Erfindung, unter Überwindung der Nachteile des Standes der Technik einen verbesserten Entsafter zu schaffen, der bei möglichst einfacher Gestaltung wirtschaftlich herzustellen, im Betrieb zuverlässig und allgemein bequem zu gebrauchen ist.

Wesentliche Merkmale des erfindungsgemäßen Entsafters sind im kennzeichnenden Teil von Anspruch 1 angegeben. Ausgestaltungen sind Gegenstand der Ansprüche 2 bis 15.

Dank der erfindungsgemäßen Anordnung eines Einsatzes mit darunter befindlicher Saftauffangschale, von der wenigstens eine Abfülleitung nach außen führt, kann man die Entsaftung mit einem gewissen, vorzugsweise geringen Überdruck durchführen. Dabei ist es von besonderem Vorteil, daß dieser Überdruck im Entsafter das Abfüllen auch auf höherem Niveau ermöglicht, vor allem in Höhe der Herdplatte, die den Topf beheizt. Dies ermöglicht eine mühelose Handhabung und gewährt sogleich größere Sicherheit als bisher, weil am Entsafter selbst namentlich im unteren Bereich keine Teile mehr vorstehen, die einer Beschädigungsgefahr ausgesetzt wären. Außerdem genügt als äußerer Hauptbestandteil des Entsafters ein gewöhnlicher Topf, so daß man ein Universalgerät vor sich hat, das auch auf andere Weise im täglichen Hausgebrauch einsetzbar ist.

Eine wichtige Weiterbildung der Erfindung besteht gemäß Anspruch 2 darin, daß den Deckel nahe seinem Umfang eine Abfülleitung abgedichtet durchsetzt, deren unteres Ende in die Saftauffangschale ragt. Bevorzugt verwendet man laut Anspruch 3 ein Steigrohr, dessen oberes Ende einen absperrbaren Auslauf hat. Die Abfülleitung kann gemäß Anspruch 4 im Deckel fest angebracht sein, aber auch nach Anspruch 5 eine Dichtung im Deckel durchsetzen. Dessen Handhabung wird laut Anspruch 6 erleichtert, wenn die Abfülleitung in einer Dichtungsebene geteilt und die Dichtung beidseitig wirksam ist.

Über ein so gestaltetes und angeordnetes Abfüllrohr kann der erhaltene Saft auf einfachste Weise unter Überdruck sicher abgefüllt werden.

Gemäß Anspruch 7 kann zur Abstützung der Saftauffangschale im Abstand zum Topfboden ein Rost angeordnet sein. Unterhalb dieses Rostes ist im Betrieb Wasser zum Zweck der Dampferzeugung vorhanden. Oberhalb der Saftauffangschale befindet sich der Einsatz, welcher nach Anspruch 8 am Umfang, vor allem oben, mit Öffnungen zum Safteinlaß versehen ist. Das zu entsaftende Gut wird also von oben her mit Dampf beschickt, wobei der vorhandene Überdruck auch eine gewisse Temparatursteigerung und damit eine Verbesserung des thermischen Wirkungsgrades sowie eine Beschleunigung des Entsaftens herbeiführt. Die Öffnungen am Einsatz-Oberteil sind mit dem Dampfraum im Topf gemäß Anspruch 9 strömungsverbunden.

Laut Anspruch 10 kann ein Zusatz-oder Zwischendeckel vorhanden sein, der einen Bördelrand zum Zentrieren des Einsatzes aufweist. Es ist aber auch möglich und gemäß Anspruch 11 vorgesehen, daß der Topfrand innen eine Schräge oder Rundung hat, an welcher der obere Rand des Einsatzes formschlüssig zentriert zur Anlage kommt. Dadurch wird eine zuverlässige Handhabung gewährleistet. Sie wird noch laut Anspruch 12 dadurch erleichtert, daß am oberen Rand des Einsatzes versenkbare Griffe angeordnet sind, namentlich Drahtbügel. Zur Festlegung des Deckels auf dem Topfrand können gemäß Anspruch 13 an sich bekannte Spannklammern, Bajonettriegel und dergleichen vorhanden sein.

Zur Einstellung oder Wahl eines bestimmten Überdruckes dienen die Maßnahmen des Anspruches 14. Beispielsweise kann man mit einem Überdruck von etwa 0,05 bar arbeiten und das Sicherheitsventil so auslegen, daß es bei ca. 0,07 bar anspricht.

Günstig ist es ferner, wenn man den Topf gemäß Anspruch 15 mit einem an sich bekannten Kompensboden versieht, der aus unterschiedlichen Materialschichten bestehen kann und zur besseren Speicherung und Verteilung der von der Herdplatte übernommenen Wärme dient. Vorteilhaft ist es, einen Topf aus Edelstahl mit einem Mehrschichtboden aus Aluminium und Edelstahl zu versehen. Diese Werkstoffwahl sichert nicht nur bequeme Reinigung, sondern auch volle Hygiene; da Edelstahl auch gegen Fruchtsäuren resistent ist, finden keine chemischen Veränderungen des gewonnenen Saftes statt.

Weitere Merkmale, Einzelheiten und Vorteile der Erfindung ergeben sich aus dem Wortlaut der Ansprüche sowie aus der folgenden Beschreibung eines Ausführungsbeispieles anhand der Zeichnung. Darin zeigen:

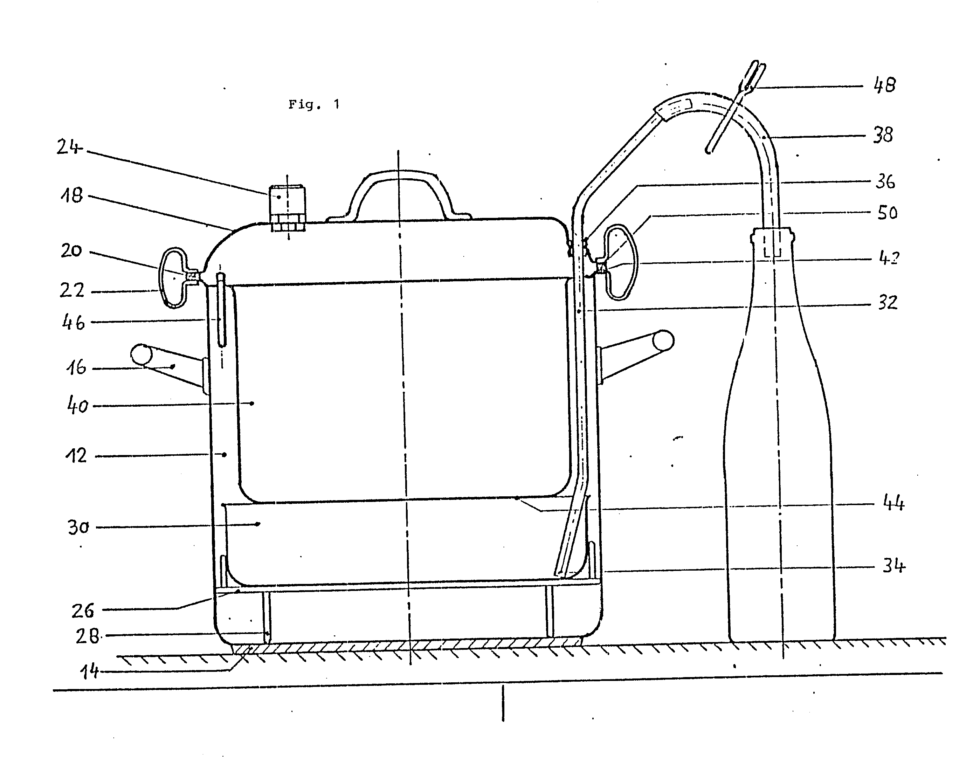

Fig. 1 eine schematisierte Seiten-Schnittansicht eines Entsafters und

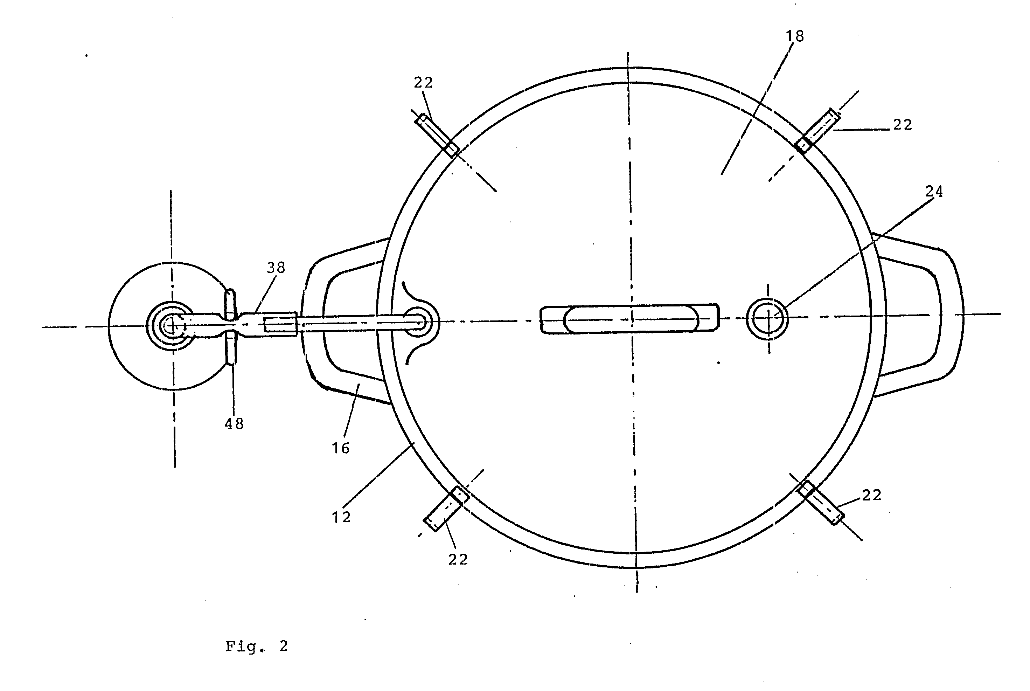

Fig. 2 eine Draufsicht auf den Entsafter von Figur 1.

In seiner Gesamtheit ist der dargestellte Entsafter mit 10 bezeichnet. Er besteht aus einem Topf 12, der ein serienmäßiger zylindrischer Edelstahltopf mit Kompensboden 14 und Griffen 16 sein kann. Ein Deckel 18 ist unter Zwischenlage eines Dichtungsringes 20 mittels Spannklammern 22 festlegbar, die als federnde Klemmbügel gestaltet sein können. Der Deckel 18 ist mit einem Sicherheitsventil 24 versehen.

Bevorzugt ist der Boden 14 als wärmespeichernder und -leiffähiger Mehrschichtboden ausgebildet. Auf ihm ruht im Inneren des Topfes 12 ein Rost 26 auf Stützen 28. Der Raum unterhalb der Rostfläche dient zur Aufnahme eines Wasservorrats, mit dem im Betrieb Dampf erzeugt wird.

Auf dem Rost 26 steht eine Saftauffangschale 30, in die ein Abfüllrohr 32 mit seinem unteren Ende 34 ragt. Weiter oben durchsetzt das Abfüllrohr 32 eine Dichtung 36 im Deckel 18. Außen schließt sich ein Auslauf 38 an, der beispielsweise mittels einer Klammer 48 bedarfsweise absperrbar ist.

Oberhalb der Saftauffangschale 30 ist im Topf 12 ein Einsatz 40 angeordnet, der bevorzugt mit seinem oberen Rand 42 formschlüssig an einer Rundung 50 des Topfrandes hängt. Der Einsatz 40 kann insgesamt perforiert sein, er hat jedoch zumindest einen Lochboden 44 und (nicht dargestellte) Öffnungen jedenfalls an seinem Oberteil, die eine Strömungsverbindung mit dem Ringraum R herstellen, der im Betrieb Dampf enthält. Der Einsatz 40 ist ferner mit Griffen in Form von Drahtbügel 46 versehen, die das Herausheben und Einführen des Einsatzes 40 nach Bedarf ermöglichen.

Als Beispiel eines Auffangbehälters ist eine Flasche F dargestellt, in die der Auslauf 38 führt, welcher als biegsamer Schlauch gestaltet sein kann.

Die Verwendungsweise ist wie folgt. In den Topf 12 wird Wasser in genügender Menge eingefüllt, so daß der dann einzustellende Rost 26 noch herausragt. Auf dem Rost 26 stützt sich die Saftauffangschale 30 ab. Nun wird in den Topf 12 der Einsatz 40 mit dem zu entsaftenden Gut eingehängt. Der Einsatz 40 zentriert sich mit seinem oberen Rand 42 entweder an der Rundung 50 des Topfrandes oder mit einem (nicht dargestellten) Zusatzdeckel.

Sodann wird der Topf 12 durch den Deckel 18 verschlossen. Dabei taucht das Abfüllrohr 32 in die Saftauffangschale 30 ein. Mit den Klemmbügeln bzw. Spannklammern 22 wird der Dekkel 18 unter Zwischenlage des Dichtungsringes 20 auf dem Topfrand festgelegt. Die Dichtung 36 gewährleistet den Durchtritt des oberen Endes der Abfülleitung 32.

Bei Beheizung des Topfes 12 entsteht Wasserdampf im Ringraum R. Infolge der Dichtheit des Deckels entsteht im Innern des Topfes 12 ein Überdruck, der als Pressdruck auf das zu entsaftende Gut wirkt und den entstehenden Saft durch das Abfüllrohr 32 in den Auslauf 38 und von dort in einen Aufnahmebehälter fördert, der im gezeigten Beispiel eine Flasche F ist. Wird der Überdruck zu groß, so spricht das Sicherheitsventil 24 an und es entweicht Dampf. Kurzzeitig kann die Abfüllung etwa durch Abklemmen des Auslaufschlauches 38 unterbrochen werden; man ersetzt eine volle Flasche F durch eine leere, worauf nach Entfernen einer Klammer 48 die Abfüllung weiter geht. Die Handhabung ist dabei äußerst einfach, zumal sie in bequemer Arbeitshöhe und sehr übersichtlich stattfindet.

Es ist ein wichtiger Vorteil der Erfindung, daß gewöhnliche zylindrische Serientöpfe verwendet werden können, die auch für andere Zwecke nutzbar sind. Beispielsweise kann durch Verschließen der Deckelöffnung ein erfindungsgemäßer Entsafter 10 auch als Dämpfer Verwendung finden. Die gute Abdichtung verhindert das Entweichen von Dunst und Wasserdampf, so daß nicht nur Energie eingespart, sondern auch das Klima im Arbeitsraum nicht beeinträchtigt wird. Der spezielle Speicherboden des Topfes 12 gewährleistet eine optimale Energieverwertung.

Sämtliche aus den Ansprüchen, der Beschreibung und der Zeichnung hervorgehenden Merkmale und Vorteile der Erfindung, einschließlich konstruktiver Einzelheiten und räumlicher Anordnungen können sowohl für sich als auch in den verschiedensten Kombinationen erfindungswesentlich sein.

## Ansprüche

1. Entsafter (10), bestehend aus einem Topf (12), einem das zu entsaftende Gut aufnehmenden, mit einem Sieb-oder Lochboden (44) versehenen Einsatz (40) und einem Deckel (18), der außen ein Sicherheitsventil (24) sowie am Umfang einen Dichtungsring (20) aufweist und auf dem Topfrand druckdicht befestigbar ist, dadurch gekennzeichnet, daß der Einsatz (40) mit seinem oberen Rand (42) unmittelbar an den Deckel (18) anschließt und daß sich unterhalb seines Lochbodens (44) eine Saftauffangschale (30) befindet, von der wenigstens eine Abfülleitung (32) nach außen führt.

2. Entsafter nach Anspruch 1, dadurch gekennzeichnet, daß den Deckel (18) nahe seinem Umfang eine Abfülleitung (32) abgedichtet durchsetzt, deren unteres Ende (34) in die Saftauffangschale (30) ragt.

3. Entsafter nach Anspruch 1 oder 2, dadurch gekennzeichnet, daß die Abfülleitung (32) als Steigrohr ausgebildet ist, dessen oberes Ende einen abstellbaren Auslauf hat.

4. Entsafter nach einem der Ansprüche 1 bis 3, dadurch gekennzeichnet, daß die Abfülleitung (32) im Deckel (18) fest angebracht ist.

5. Entsafter nach einem der Ansprüche 1 bis 4, dadurch gekennzeichnet, daß die Abfülleitung (32) eine Dichtung (36) im Deckel (18) durchsetzt.

6. Entsafter nach Anspruch 5, dadurch gekennzeichnet, daß die Abfülleitung (32) in einer Dichtungsebene geteilt und die Dichtung (36) beidseitig wirksam ist.

7. Entsafter nach wenigstens einem der Ansprüche 1 bis 6, dadurch gekennzeichnet, daß zur Abstützung der Saftauffangschale (30) ein im Abstand (A) zum Topfboden (14) angeordneter Rost (26) vorhanden ist.

8. Entsafter nach wenigstens einem der Ansprüche 1 bis 7, dadurch gekennzeichnet, daß der Einsatz (40) am Umfang, insbesondere an oder nahe seinem oberen Rand (42), mit Öffnungen zum Dampfeinlaß versehen ist.

9. Entsafter nach Anspruch 7 und 8, dadurch gekennzeichnet, daß die Öffnungen mit dem Raum unterhalb des Rostes (26) strömungsverbunden sind, bevorzugt durch einen äußeren Ringraum (R) im Topf (12).

10. Entsafter nach wenigstens einem der Ansprüche 1 bis 9, dadurch gekennzeichnet, daß ein Zusatz-oder Zwischendeckel vorhanden ist, der einen Bördelrand zum Zentrieren des Einsatzes (40) aufweist.

11. Entsafter nach wenigstens einem der Ansprüche 1 bis 10, dadurch gekennzeichnet, daß der Topfrand innen eine Schräge oder Rundung (50) hat, an welcher der obere Rand (42) des Einsatzes (40) formschlüssig zentriert zur Anlage kommt.

12. Entsafter nach wenigstens einem der Ansprüch 1 bis 11, dadurch gekennzeichnet, daß am oberen Rand (42) des Einsatzes (40) an sich bekannte versenkbare Griffe angeordnet sind, namentlich Drahtbügel (46).

13. Entsafter nach wenigstens einem der Ansprüche 1 bis 12, dadurch gekennzeichnet, daß zur Festlegung des Deckels (18) auf dem Topfrand an sich bekannte Spannklammern (22), Bajonettriegel und dergleichen vorhanden sind.

14. Entsafter nach wenigstens einem der Ansprüche 1 bis 13, dadurch gekennzeichnet, daß das Sicherheitsventil (24) in an sich bekannter Weise einen Ventilkörper aufweist, der durch sein Gewicht und/oder in vorgegebenem oder einstellbarem Maße durch die Kraft einer Ventilfeder auf seinen Sitz gedrückt wird.

15. Entsafter nach wenigstens einem der Ansprüche 1 bis 14, dadurch gekennzeichnet, daß der Topf (12) einen an sich bekannten Kompensboden (14) aufweist.

Fig. 1

0 282 890

Fig. 2

0 282 890

**Europäisches Patentamt**

# EUROPÄISCHER RECHERCHENBERICHT

Nummer der Anmeldung

EP 88 10 3692

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 854 124 (BRIERLEY) <br> * Insgesamt * | 1 | A 47 J 27/04 |
| A | | 8,11 | |
| | --- | | |
| Y | DE-C- 705 397 (WÜRTTEMBERGISCHE METALLWARENFABRIK) <br> * Insgesamt * | 1 | |
| A | | 2-9,13 | |
| | --- | | |
| Y | DE-C- 635 509 (SCHMIDT et al.) <br> * Insgesamt * | 1 | |
| A | | 7-9 | |
| | --- | | |
| Y | DE-B-1 247 574 (ROLLMANN & TOVAR GmbH) <br> * Insgesamt * | 1 | |
| A | | 3,7,8, 13,14 | |
| | --- | | |
| A | DE-B-1 039 728 (RITTER) <br> * Insgesamt * | 1-4,7-9 ,13 | |
| | --- | | |
| A | CH-A- 652 293 (MAUCH ELRO-WERKE AG) <br> * Figur 1 * | 13-15 | **RECHERCHIERTE SACHGEBIETE (Int. Cl.4)** <br><br> A 47 J |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 13-06-1988 | SCHARTZ J. |